# EUROPEAN PATENT SPECIFICATION

(11) **EP 2 540 595 B1**
(45) Date of publication and mention of the grant of the patent: **12.03.2014**
(21) Application number: 12173616.9
(22) Date of filing: 26.06.2012
(51) Int. Cl.: B62D 7/14, B62D 13/02, B62D 7/15

(54) **Steering device for a multi-axle vehicle**
Lenkvorrichtung für mehrachsiges Fahrzeug
Dispositif de direction pour véhicule à plusieurs essieux

(30) Priority: 27.06.2011 NL 1038901; 13.07.2011 NL 2007095
(43) Date of publication of application: 02.01.2013
(73) Proprietor: Nooteboom Group B.V., 6603 BV Wijchen (NL)
(72) Inventor: Taken, Peter Franciscus Maria, 6604 EJ Wijchen (NL)
(74) Representative: Bartelds, Erik

(56) References cited:
- EP-A1- 1 577 159
- EP-A2- 0 870 671
- DE-A1- 3 428 470
- GB-A- 2 341 157

## Description

The invention relates to a device for steering a multi-axle vehicle, which vehicle has on each axle at least two wheels arranged on either side of the vehicle, wherein the wheels of at least two axles are steerable, which steering device comprises steering rods connecting the steerable wheels to each other and is adapted such that for the wheels of at least one axle a ratio of a movement of the steering rod and a resulting steering movement of the wheels is adjustable subject to a mode of use of the vehicle. Such a steering device is already known.

In multi-axle vehicles with steerable wheels on a plurality of axles the problem occurs that it is not easy to have all wheels perform a purely circular movement around the same centre during travel through a bend. This is because the steering movements of the different wheels have to be adapted to each other for this purpose. This is not always the case in practice, whereby the wheels of some axles not only roll in the travel direction over the road surface but are also pulled sideways thereover when the vehicle negotiates a bend. This sideways slipping movement over the road surface results on the one hand in additional wear of the tyre and also causes additional loads on the wheel and the surrounding construction. When the wheels are embodied as pivoted axle wheel sets, the additional problem occurs that a slipping wheel set will pivot about the shaft as a consequence of the lateral load, whereby one of the wheels of the pivoted axle set will be more heavily loaded than the other. The most important advantage of a pivoted axle wheel set, i.e. the uniform distribution of the load over the width of the vehicle, is partially lost as a result. The resulting wear is moreover considerably greater in this case than in wheel sets or wheel suspensions of other types.

The problem of wheels slipping over the road surface occurs particularly in vehicles in which the steerable wheels can be placed at different positions, such as vehicles with an adjustable length or modular vehicles which can be assembled from different numbers of modules. These types of vehicle are in practice mainly pulled vehicles, so trailers or semi-trailers, and the distance between the steerable wheels and the coupling between the pulled and the pulling vehicle are important for the steering behaviour in bends. This distance is after all different at each set length in the case of extendable or modular vehicles. The bend radius and the position of the centre of the bend, the so-called momentary centre, hereby also differ at a determined angular displacement of the pulling vehicle relative to the trailer or semi-trailer. The ratio of the steering movements of the steerable wheels of the pulled multi-axle vehicle and the angular displacement of the pulling vehicle relative to the pulled vehicle will thus be optimal only at a determined distance between the coupling and the steerable wheels. At all other distances, so when the multi-axle vehicle is lengthened or, conversely, shortened relative to this optimal state, this ratio will represent a compromise.

In order to resolve this problem it is already known in modular vehicles to modify the positions of the steering rods in the different modules to the length of the assembled vehicle and the location of the wheels therein. Connected for this purpose to each wheel is a plate provided with a large number of openings. Using a manual a user can then find, for each length of the assembled vehicle, a combination of holes in which the ends of the steering rods must be mounted in order to arrive at the best possible compromise. This solution has the drawback that repositioning all the steering rods is a great deal of work, which is moreover made more difficult because the steering rods are usually arranged on the inner side of the vehicle, and so are poorly accessible. The chance of errors during placing of the steering rods is moreover considerable in view of the large number of possible combinations of holes in the plates.

The prior art document EP 0 870 671 A2 discloses a vehicle, in particular a mobile crane, having steerable wheels arranged in a front group, a middle group and a rear group, and a system for adjusting the steering ratio between the front, middle and rear wheels. This system is intended to combine stable steering during road driving when the middle wheels are aligned and the possibility of "dog trotting" or "crab steering" on a construction site. This system is based on adjusting the length of steering rods and actuating separate steering cylinders to form a required configuration.

In the prior art document DE 34 28 470 A1 an undercarriage for a mobile crane is disclosed, which has pivotable support arms, each of which is provided with steerable wheels. In order to maintain the wheels in parallel position and provide normal steering, a pivotable plate is arranged between the steering rod and the steering arm of each wheel, which plate has a plurality of openings for a locking pin. This allows all wheels to be preset in the same orientation, so that there is no variation in the steering ratios.

And finally, the prior art document GB 2 341 157 A discloses a three axle vehicle having steerable wheels on all axles, in which the steering ratio between the front wheels, the middle wheels and the rear wheels can be adjusted. To that end a pivotable element is arranged on the chassis at the position of the middle axle, and the steering ratio is adjusted by moving this element. This system is intended to align the rear wheels during driving on the road and align the middle wheels during off-road driving.

The invention now has for its object to provide a steering device for a multi-axle vehicle in which these drawbacks do not occur, or at least do so to lesser extent. This is achieved according to the invention in that at least one steering rod is connected displaceably to the wheel of one of the axles by means of a transmission element connected pivotally to a suspension part of said wheel. The ratio of the movement of the steering rod and the resulting steering movement of the wheel, the transmission ratio, can thus be varied without the steering rod having to be manually removed and displaced.

Because the transmission ratio can thus be varied relatively easily, the steering movement of the wheels on the associated axle can be adapted better than previously to the bend radius and the position of the momentary centre. The thus set transmission ratio is dependent on a mode of use of the vehicle. In the case of a telescopically extendable vehicle this mode of use can be the degree of extension or, in the case of a modular vehicle, the number of coupled modules and their length. This mode of use does after all determine the length of the vehicle, and thereby the distance between the associated axle and the coupling to the pulling vehicle.

The transmission element is preferably lockable relative to the wheel. By optionally fixing the element in a predetermined position a related transmission ratio can be set.

This can be achieved in structurally simple manner with a locking pin which co-acts with openings in the transmission element and in the suspension part of the wheel. Such a locking pin can be easily carried and quickly placed or removed.

It is recommended that at least one wheel is lockable relative to the vehicle. A range of transmission ratios can thus be set by locking the wheel - when it lies in straight position - or the transmission element as desired.

When the wheel forms part of an intermediate axle and the transmission element has two ends each connected to a steering rod, in addition to a pivot shaft located therebetween and bearing-mounted on the suspension part of the wheel, the transmission ratios of a plurality of wheels can be adapted by pivoting the transmission element. The directions of the steering movement can particularly then differ on either side of the intermediate axle.

When in this embodiment the wheel on which the transmission element is mounted as well as one of the adjacent wheels are lockable in their straight position, and the transmission element is also lockable, at least three different configurations can be formed. When only the wheel bearing the transmission element is locked, the wheels on either side thereof steer in mutually opposite directions. Conversely, when only the adjacent lockable wheel is locked in its straight position, the wheel bearing the transmission element steers in the same direction as the adjacent wheel on the other side. The steering movement is however smaller as a result of the action of the transmission element. Finally, the transmission element alone could be locked and all wheels freely rotatable. In this case all wheels steer in the same direction, wherein the steering movement from wheel to wheel becomes increasingly smaller.

In another embodiment of the invention, when the relevant wheel forms part of the foremost or rearmost axle, and no further wheels need therefore be influenced, the transmission element can be connected at one end to a steering rod and pivotally mounted at the other on the suspension part of the wheel.

The invention also relates to a multi-axle vehicle which has on each axle at least two wheels arranged on either side of the vehicle, wherein the wheels of at least two axles are steerable, and which is provided with a steering device as specified above.

Such a multi-axle vehicle can be provided with a chassis adjustable in longitudinal direction. Owing to the presence of the above described steering device the steering movement of the wheels of one or more axles can then be adapted to the set length of the chassis.

It is on the other hand also possible to envisage the multi-axle vehicle forming a module and being provided with means for coupling thereof to another vehicle module. The steering movement can then also be adapted to the length of the finally assembled vehicle which is determined by the number of modules coupled to each other and the length of each module.

In a preferred embodiment of the multi-axle vehicle according to the invention at least some of the axles have two wheels on each side of the vehicle which are embodied as pivoted axle wheel sets. It is precisely in the case of pivoted axle wheel sets that the adjustability of the steering movement provides great advantages, since it is here that the consequences of wheels slipping in transverse direction over the road are relatively great.

The invention also relates to a method for steering a multi-axle vehicle, which vehicle has on each axle at least two wheels arranged on either side of the vehicle, wherein the wheels of at least two axles are steerable and the steerable wheels are connected to each other by steering rods, comprising of generating a steering signal and transmitting the steering signal via the steering rods to the steerable wheels, wherein prior to transmitting the steering signal a transmission ratio between the steering signal and a resulting steering movement for the wheels of at least one axle is set by displacing the connecting point of at least one steering rod to the wheel of one of the axles. Such a method is characterized according to the invention in that the at least one steering rod is connected to the wheel by means of a transmission element mounted pivotally on the wheel, and the transmission ratio is set by pivoting the transmission element.

Preferably applied variants of this method form the subject-matter of the sub-claims 12-15.

The invention is now elucidated on the basis of two embodiments, wherein reference is made to the accompanying drawing in which corresponding components are designated with the same reference numerals, and in which:
Figure 1A is a schematic top view of a combination of an eight-axle pulled vehicle and a pulling vehicle during travel in a bend, wherein the steerable wheels of the eight-axle vehicle lie relatively closely behind the pulling vehicle and each have a steering movement which is optimal for this situation,
Figure 1B is a view corresponding to Figure 1A of the combination in a bend when the steerable wheels of the eight-axle pulled vehicle lie relatively further behind the pulling vehicle and each once again have a steering movement which is optimal for this situation,
Figure 2A shows a bottom view of a part of the eight-axle vehicle according to the invention when negotiating the bend in the short state and with a maximum steering movement, wherein the foremost wheels counter-steer and the rearmost wheels co-steer;
Figure 2B is a view corresponding to Figure 2A of the vehicle according to the invention in the long state, wherein the foremost wheels lie straight and the rearmost wheels co-steer;
Figures 3A and 3B show enlarged detail views as according to arrows III in Figures 2A and 2B;

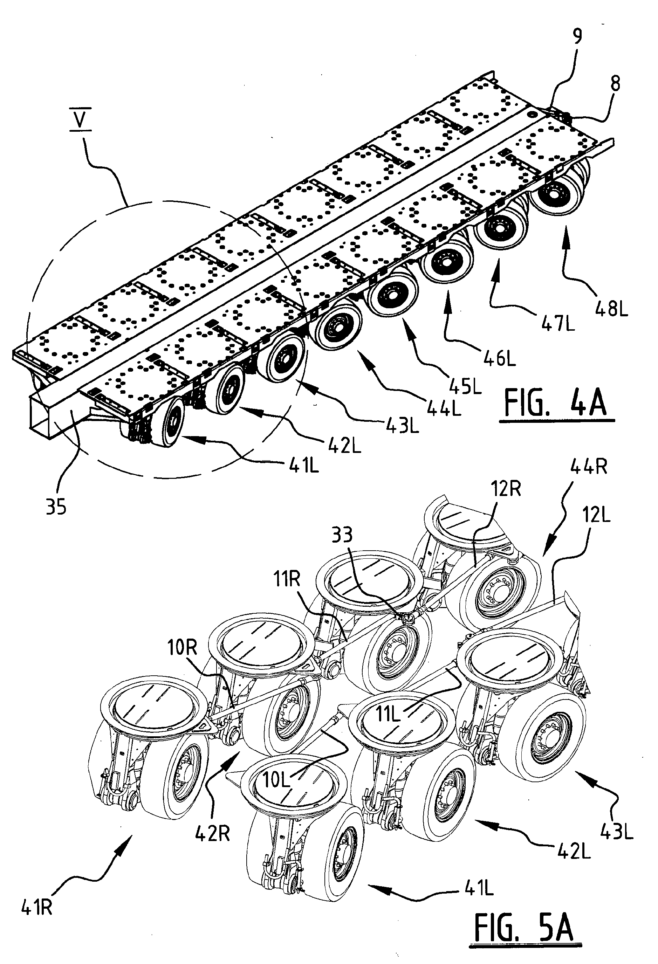

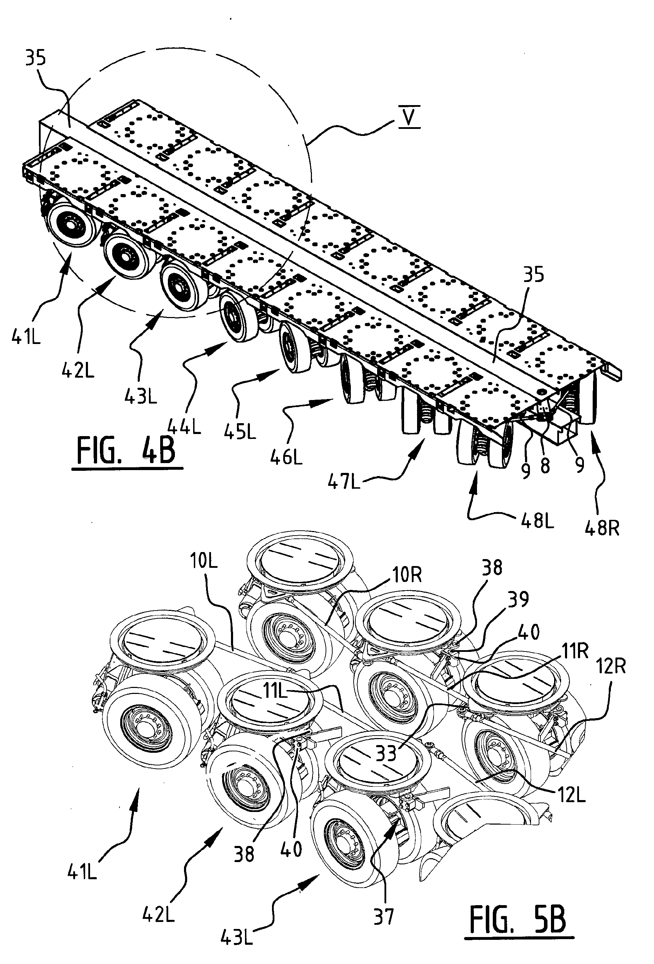

Figures 4A and 4B are isometric views of the part of the eight-axle vehicle shown in Figure 2A from different angles of view;
Figures 5A and 5B show enlarged detail views of the circled parts V of Figures 4A and 4B, wherein the chassis of the vehicle is omitted for the sake of clarity;
Figures 6A and 6B show views corresponding to Figures 4A and 4B of the vehicle in the situation of Figure 2B;
Figures 7A and 7B show views corresponding to Figures 5A and 5B in this situation;
Figures 8A and 8B are bottom views of a five-axle vehicle in a bend in retracted or extended state, wherein the maximum steering movement is once again shown;
Figures 9A and 9B are isometric views from different angles of the five-axle vehicle in the situation of Figure 8A;
Figures 10A and 10B again show enlarged detail views of Figures 9A and 9B without the chassis;
Figures 11A and 11B show views corresponding to Figures 9A and 9B in the other situation;
Figures 12A and 12B are detail views corresponding to Figures 10A and 10B; and
Figures 13A and 13B are views corresponding to Figures 1A and 1B of the eight-axle vehicle according to the invention in retracted and extended state during travel in a bend.

When a multi-axle vehicle 1, in this case a semi-trailer with eight axles 21-28, pulled by a pulling vehicle 3 negotiates a bend, sideways slipping of wheels 41L-48L and 41R-48R can only be prevented when all wheels describe a purely circular path around a common centre M of the bend. For this purpose the steering lines S1L-S8L and S1R-S8R, so the lines forming the produced part of the axles of wheels 41L-48L, 41R-48R in the direction of the bend, all intersect each other in the bend centre, or momentary centre, M. This is known as the Ackerman principle. This momentary centre M must in any case lie on the produced part of an axle with non-steerable wheels, since these would otherwise slip over the ground. In the shown example the rearmost two axles 53, 54 of pulling vehicle 3 are provided with non-steering wheels 63, 64, while the foremost two axles 51, 52 are provided with steering wheels 61, 62. The momentary centre M thus lies on the produced part of a line between axles 63, 64.

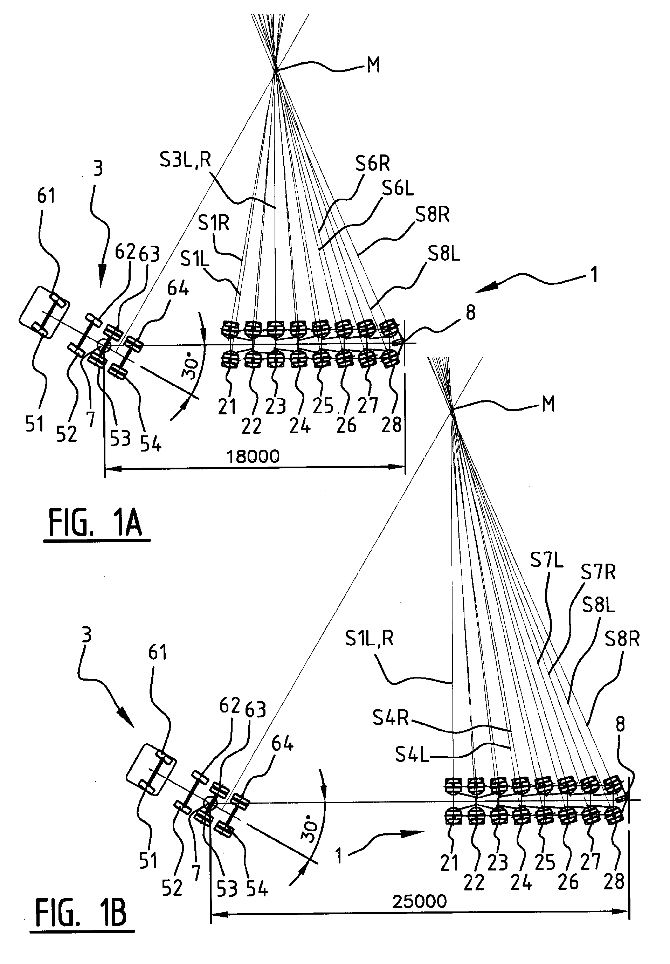

A steering movement must therefore be imparted to all steerable wheels 41L-48L, 41R-48R of multi-axle vehicle 1 such that their wheel axles are all directed toward the momentary centre M. In the shown example this is achieved in the retracted situation of vehicle 1 (Fig. 1A) reached by straightening the wheels 43L, 43R of third axle 23, steering the wheels 41L, 42L, 41R, 42R of the foremost two axles 21, 22 in a first direction - referred to here as "counter-steering" - and steering the wheels 44L-48L, 44R-48R of the rearmost five axles 24-28 in a second opposite direction - referred to here as "co-steering".

In the extended situation of multi-axle vehicle 1 the wheels 41L, 41R of the foremost axle 21 are on the other hand straightened, and the steering movement of all other wheels 42L-48L, 42R-48R of the subsequent axles 22-28 is oriented in the same direction (Fig. 1B).

These figures show an optimal situation which can only be reached when all wheels 41L-48L, 41R-48R are steerable independently of each other in any operational mode of multi-axle vehicle 1. This would be possible for instance by moving each of the wheels hydraulically, pneumatically or electrically under the influence of a control program.

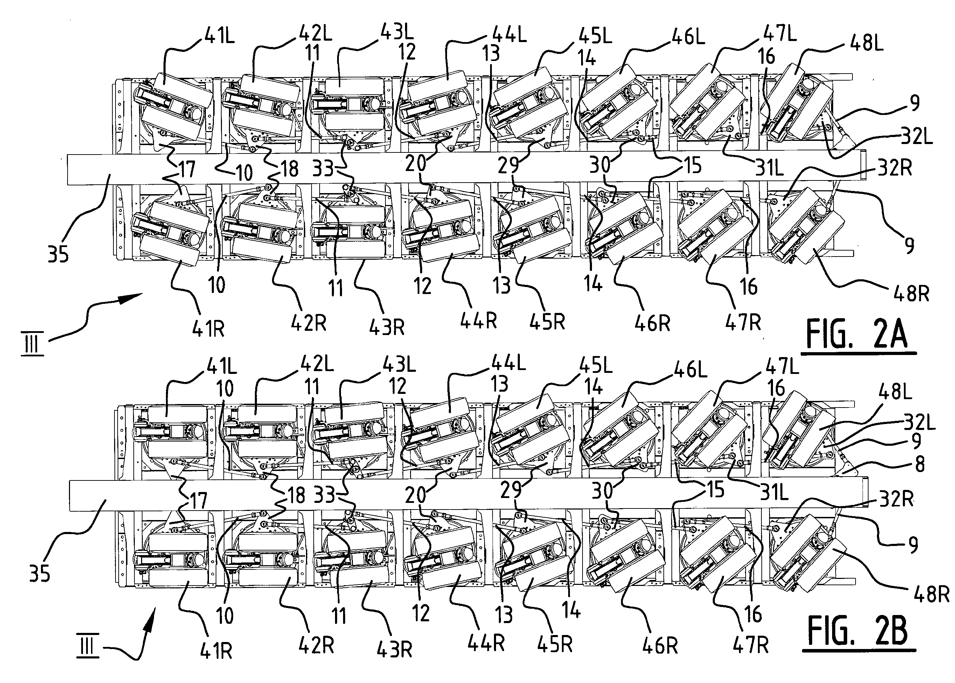

Use is however usually made in practice of a steering system wherein the wheels of adjacent axles are all connected to each other and jointly steered. Functioning as input signal in the shown embodiment is the angular displacement of pulling vehicle 3 relative to semi-trailer 1 which can be measured at the position of rotating dish 7 forming the connection between these vehicles. When the pulled vehicle is a trailer, the angular displacement of the drawbar relative to the trailer could function as input signal. In the shown embodiment this steering signal is transmitted hydraulically or mechanically to a steering member 8 which is close to the rear of vehicle 1 and which is connected by means of steering arms 9 to wheels 48L, 48R of the rearmost axle 28 on either side of vehicle 1 (Fig. 2A, 2B). From these wheels 48L, 48R the steering signal is transmitted to the wheels 41L-47L, 41R-47R located further forward by means of steering rods 10L-16L, 10R-16R. These steering rods 10L-16L, 10R-16R are each connected pivotally to an upper plate 17L-20L, 29L-32L, 17R-20R, 29R-32R of the suspension of an associated wheel 41L-48L, 41R-48R. In the shown embodiment wheels 41L-48L, 41R-48R are otherwise embodied as pivoted axle wheel sets as for instance described in the European patent 1 577 159 of applicant, although this is not essential for the present invention. For the sake of brevity reference is made to this older document for a detailed description of the construction of wheel sets 41L-48L, 41R-48R.

Because the point where a rearward directed steering rod is mounted on the upper plate lies, in the case of wheels 44R-48R of the five rear axles 24-28, increasingly further from the vertical rotation axis of the wheel than the corresponding mounting point of the forward directed steering rod, the steering movement becomes increasingly smaller as the steering signal is transmitted further by steering rods 12L-16L, 12R-16R to forward placed wheels 44L-47L, 44R-47R. The opposite is the case for wheels 41L, R of the foremost two axles 21, 22. Here the forward directed steering rod is located further from the vertical rotation axis of the wheel so that the steering movement once again increases.

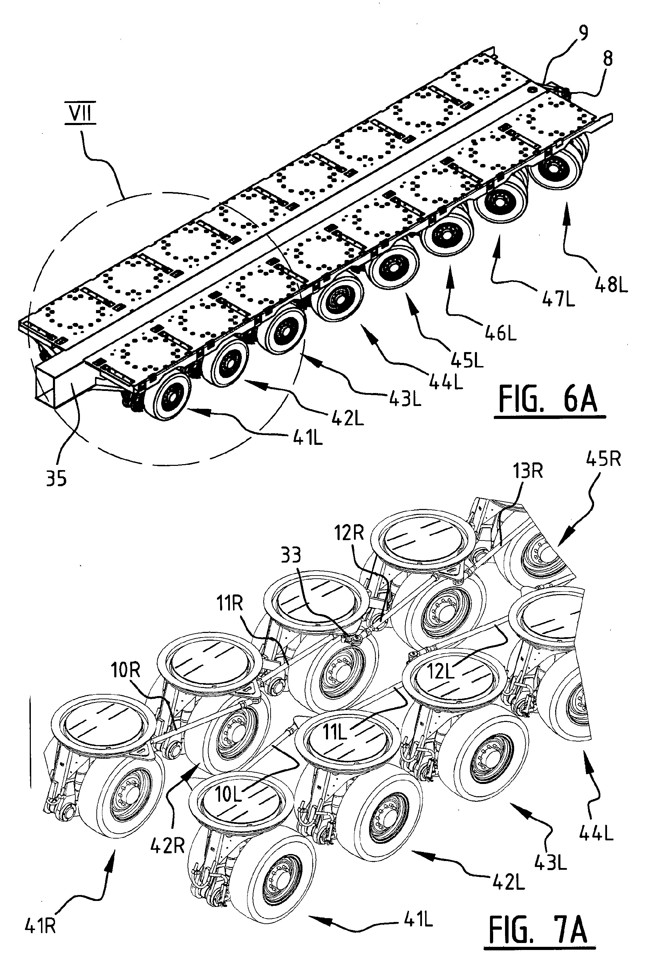

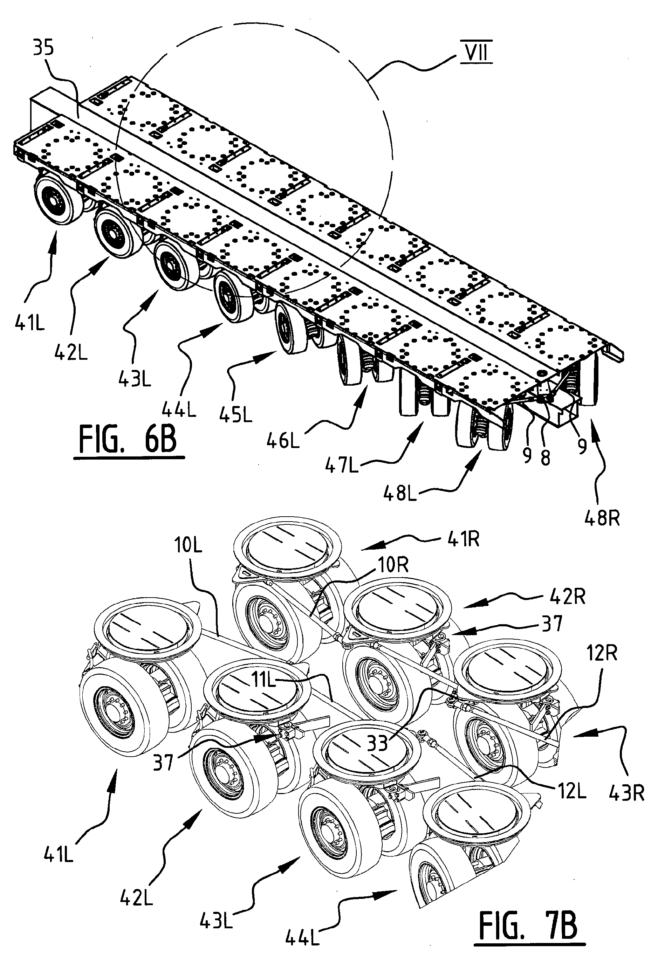

According to the invention at least one of the steering rods on each side of multi-axle vehicle 1 is not connected at a fixed point to the associated wheel, but this connection point is displaceable. In the shown example these are the steering rods 11L, 12L, 11R, 12R connected to wheels 43L, 43R of third axle 23 (Fig. 2A, 2B). Both these steering rods 11, 12 are connected in each case to the ends of a transmission element 33 which is mounted with its central part for pivoting about a shaft 34 on upper plate 19 of the suspension of wheel 34L, R. Upper plate 19 of the suspension of both second wheel 42L, R and third wheel 43L, R can be locked relative to chassis 35 of vehicle 1 by means of a locking mechanism 37. This locking mechanism 37 is formed here by a cylindrical opening 38 in upper plate 19 and a conical opening 39 in a block 40 attached to chassis 35 into which a locking pin 49 can be inserted when they lie in register (Fig. 7B). This locking pin 49 takes a partially cylindrical and partially conical form and is self-braking in opening 39 in block 40. By locking as desired the second wheel 42 or the third wheel 43 with transmission element 33 thereon in the straight position the transmission ratio between the incoming steering signal - the displacement of steering rod 12 - and the steering movement resulting therefrom - the rotation of upper plate 19 of the suspension of third wheel 43 and second wheel 42 - can be varied.

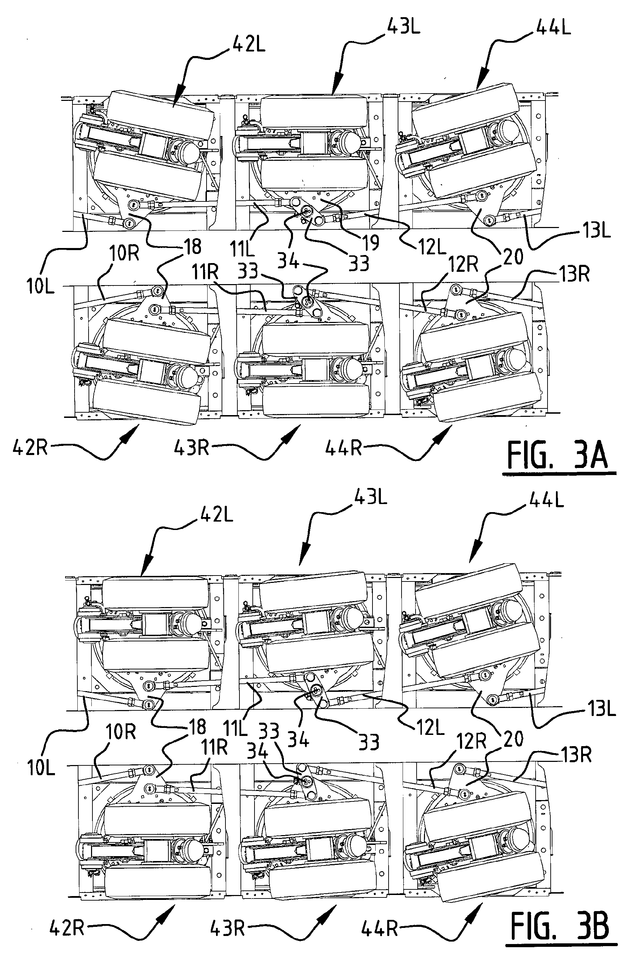

When upper plates 19L, 19R of the suspension of wheels 43L, 43R of third axle 23 are locked relative to chassis 35, the direction of the steering movement at the position of this third axle 23 is reversed by the transmission elements bearing-mounted thereon (Fig. 3A). A rearward directed displacement of the rearmost steering rod 12L and a corresponding forward directed displacement of steering rod 12R results, via the transmission elements 33 on either side, in a forward directed displacement of the foremost steering rod 11L and a rearward directed displacement of steering rod 11R. These displacements of steering rods 11L, 11R are converted to steering movements of the foregoing wheels 42L, 42R in the direction opposite to the steering movement of the rearmost wheels 44L-48L, 44R-48R. This configuration with reversal of the steering direction is particularly suitable for the retracted or short state of vehicle 1 when the steerable wheels 41L-48L, 41R-48R lie relatively close to rotating dish 7.

When on the other hand upper plates 19L, 19R of the suspensions of wheels 42L, R of second axle 22 are locked relative to chassis 35, the steering movement of fourth axle 24 is transmitted with reduced effect to third axle 23 (Fig. 3B). Transmission element 33 does after all rotate between the rear end of steering rod 11 and the forward end of steering rod 12 and via its pivot shaft 34 carries with it the upper plate 19 of wheel 43. The forward end of the foremost steering rod 11 is fixed here because wheel 42 is locked. The same is of course the case for steering rods 10L, R between wheels 41 and 42, so that wheels 41L, 41R of foremost axle 21 perform no further steering movement at all and these wheels therefore lie straight. The other wheels 43L-48L, 43R-48R perform steering movements increasing from front to rear which are oriented in the same direction as each other and are adapted to the angular displacement between the pulling vehicle 3 and the pulled vehicle 1. This configuration is particularly suitable for the extended or long state of vehicle 1 when the steerable wheels 41L-48L, 41R-48R lie relatively far from rotating dish 7.

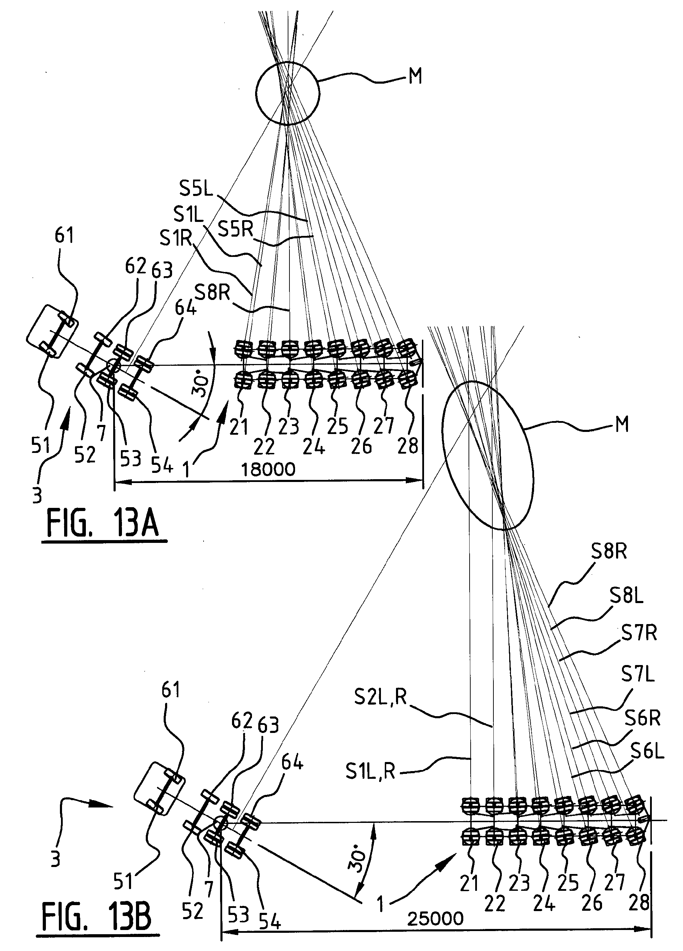

Fig. 13A and 13B show that the steering device according to the invention results in a very close approximation of the optimum steering angles. This despite the fact that the steering angles to be obtained represent a compromise determined on the one hand by the requirement that the length of multi-axle vehicle 1 can vary over a wide range and on the other by the rigid connection between the wheels on each side of vehicle 1 as a consequence of the presence of the steering rods. The intersections between the produced parts of the axles of wheels 41L-48L, 41R-48R nevertheless lie in a relatively small area, particularly in the retracted or short state of the vehicle. Sideways slipping of the wheels over the ground during travel through a blend will thus remain limited to a minimum.

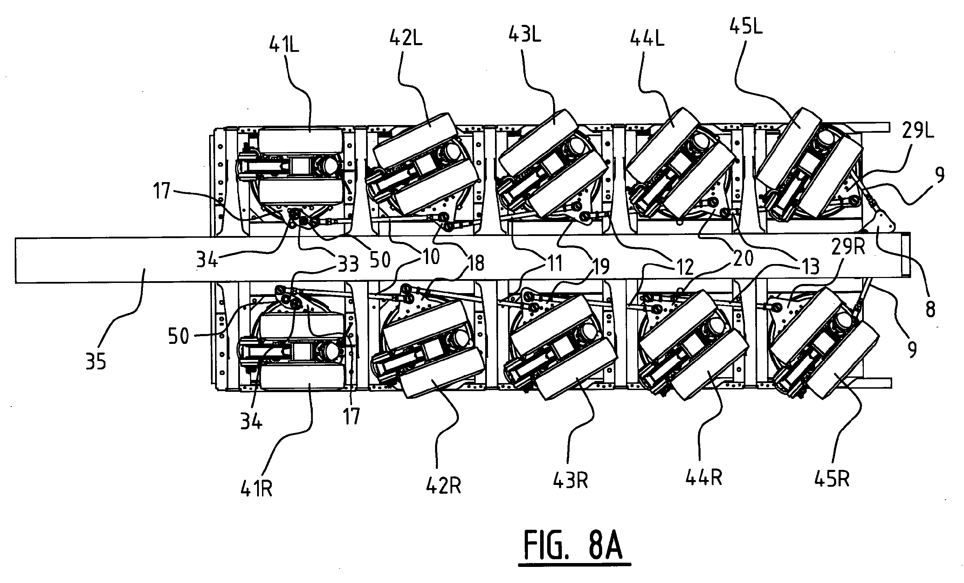

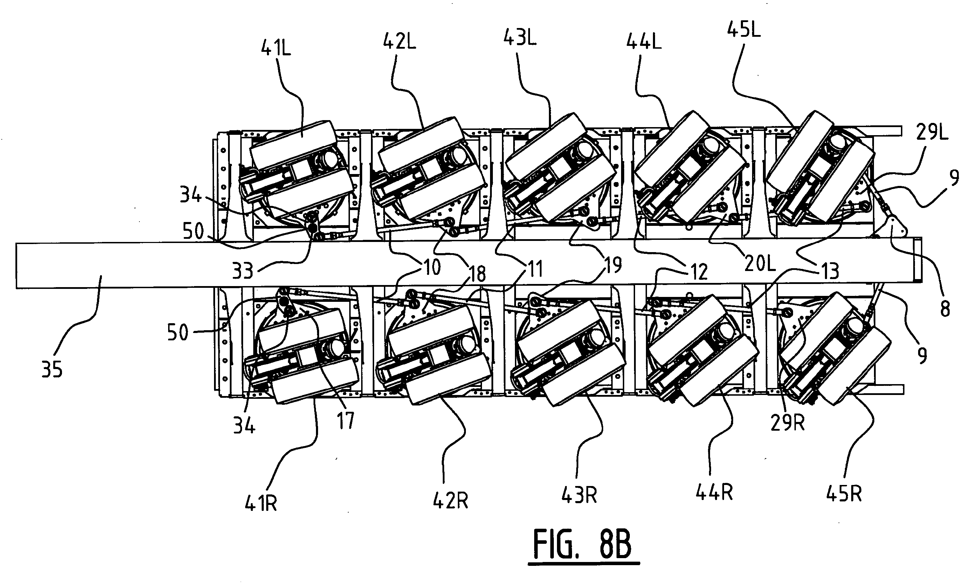

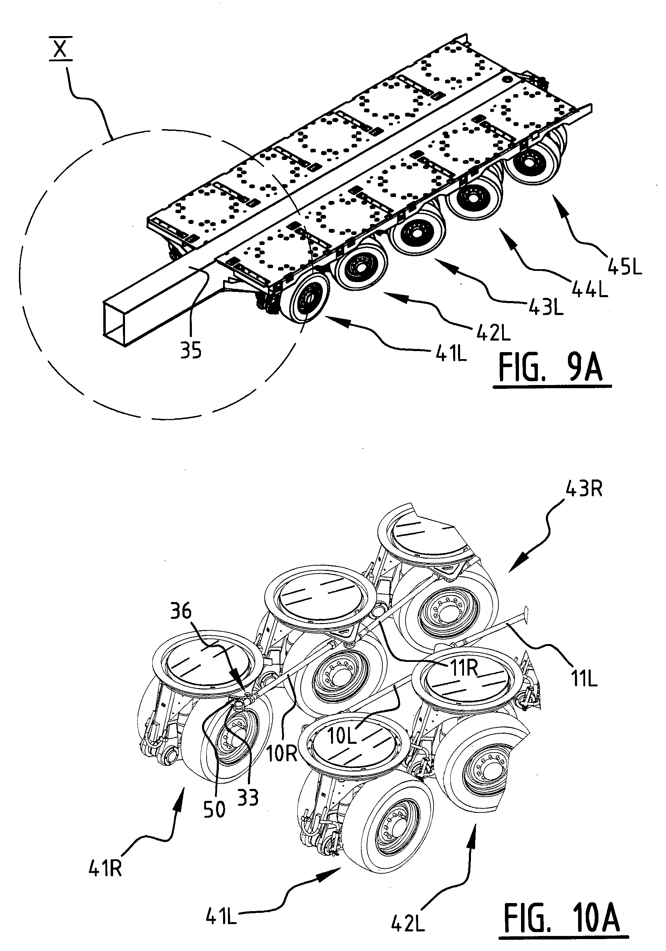

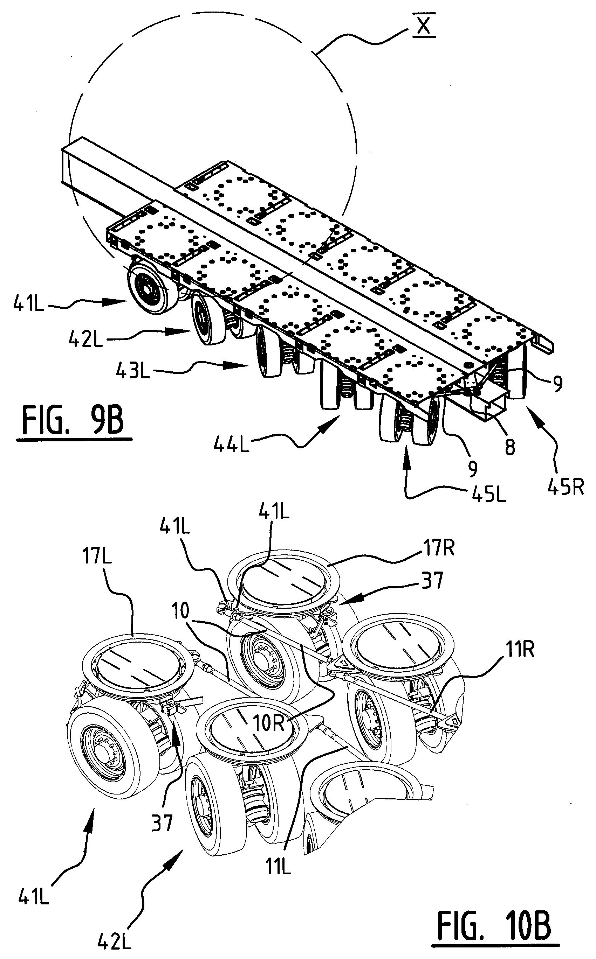

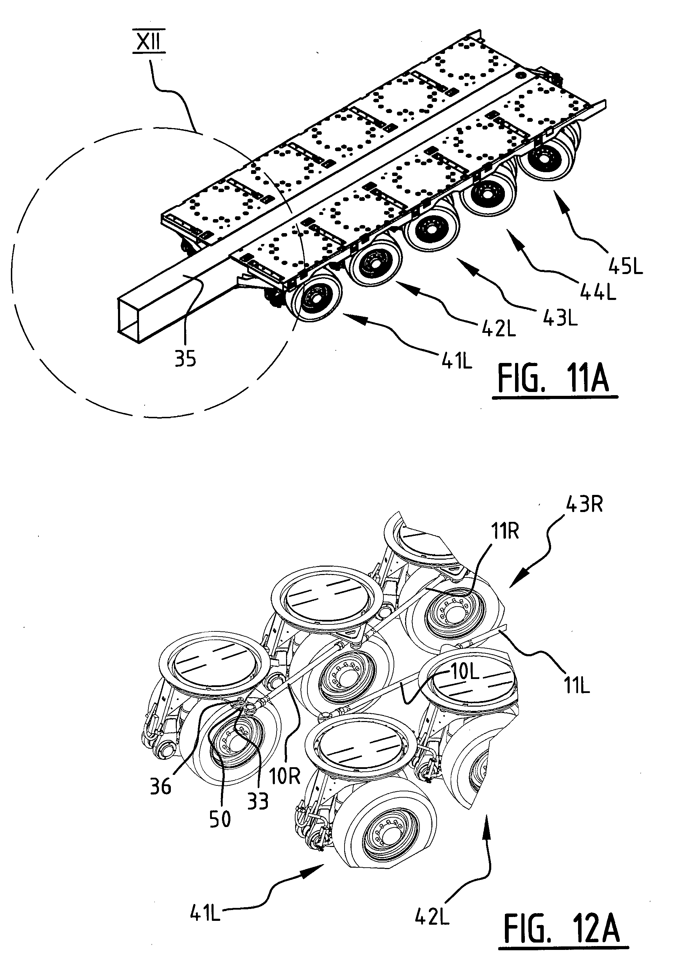

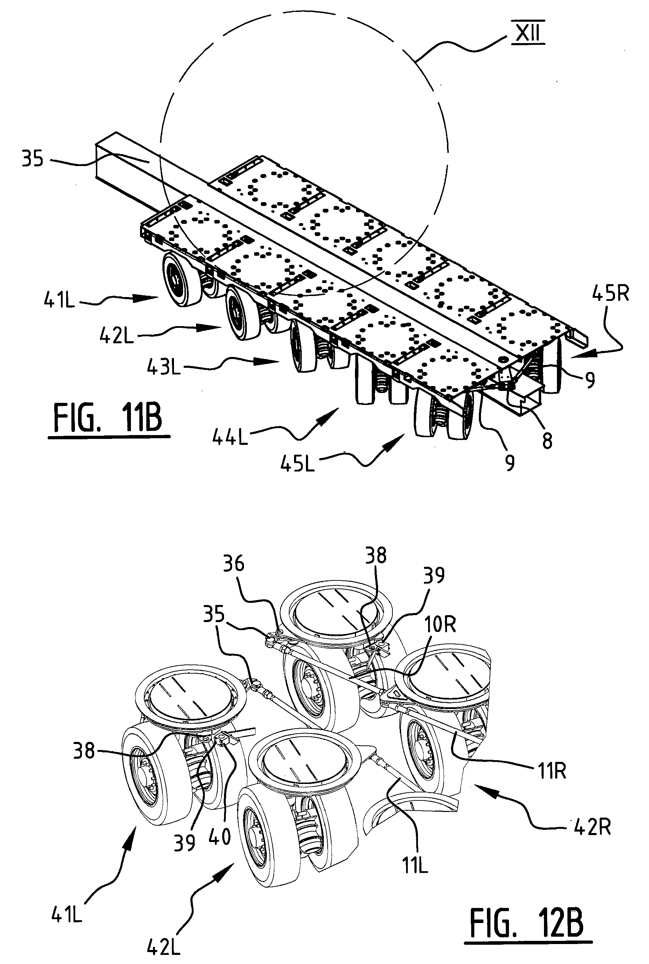

In an alternative embodiment of the steering device according to the invention, which is described here on the basis of a five-axle vehicle 1, the foremost steering rods 10L, 10R are connected displaceably to the foremost wheels 41L, 41R. For this purpose each steering rod 10 is connected with its front end to an outer end of a transmission element 33, the other end of which is mounted pivotally in upper plate 17 via a shaft 34 (Fig. 8, 10, 12). In this embodiment transmission element 33 is lockable relative to upper plate 17 of the wheel suspension. This locking is achieved in similar manner as the locking of the wheels relative to chassis 35 in the previous embodiment, by inserting a pin 35 in partially conical form through a conical opening 50 in transmission element 33 and a cylindrical opening 36 in upper plate 17. Upper plate 17 of the suspension of each foremost wheel 41L, R is also lockable relative to vehicle chassis 35. Provided for this purpose is a locking mechanism 37 similar to that of the first embodiment (Fig. 10B, Fig. 12B).

When in this embodiment the upper plates 17L, 17R of the suspension of wheels 41L, 41R are locked relative to chassis 35 and the transmission elements 33 mounted thereon are freely pivotable about their shafts 34, the foremost wheels lie straight and only wheels 42L-45L, 42R-45R of the four rear axles 22-25 perform a steering movement increasing toward the rear (Fig. 8A) . These steering movements are oriented in the same direction and follow the angular displacement between pulling vehicle 3 and vehicle 1. This configuration is particularly suitable for the retracted or short state of the five-axle vehicle 1.

When on the other hand the transmission elements 33 are locked relative to upper plates 17L, 17R, and upper plates 17L, 17R are themselves freely rotatable, the steering movement is transmitted with reduced effect from second axle 22 to first axle 21 (Fig. 8B). All wheels 41L-45L, 41R-45R thus steer in the same direction and here once again perform steering movements increasing from front to rear. This configuration is particularly suitable for the extended or long state of vehicle 1.

It is otherwise also possible to envisage combining parts of both above described embodiments in order to thus more closely approximate the situation of Fig. 1A and 1B in an eight-axle vehicle. The foremost steering rods 10L, R would for this purpose have to be connected by means of a transmission element 33 according to the second embodiment to the foremost wheels 41L, R, while transmission element 33 according to the first embodiment would have to be arranged on wheels 43L, R of third axle 23. This transmission element 33 should then be lockable relative to wheel 43L, R.

In such a "hybrid" embodiment the steering movements of Fig. 1A could be approximated by locking the transmission elements 33 on the foremost wheels 41L, R, simultaneously locking wheels 43L, R of third axle 23 and allowing the transmission element 33 mounted thereon to pivot freely. The steering movements of Fig. 1B could on the other hand be approximated by locking wheels 41L, R of the foremost axle 21, allowing the transmission elements 33 mounted thereon to pivot freely and locking the transmission elements on wheels 43L, R of third axle 23.

The invention thus makes it possible with simple means to vary the transmission ratio between a steering signal and a resulting steering movement so as to enable the best possible approximation of optimal steering angles at different lengths of a vehicle.

Although the invention has been elucidated above on the basis of a number of embodiments, these can be varied in many ways. More or fewer than two wheels per vehicle side could thus be present on each axis. The advantages of the described steering device also apply when each axis has only one wheel on each side of the vehicle. Other modifications can also be envisaged. The scope of the invention is therefore defined solely by the following claims.

## Claims

1. Device for steering a multi-axle vehicle (1), which vehicle (1) has on each axle (21-28) at least two wheels (41L-48L, 41R-48R) arranged on either side of the vehicle (1), wherein the wheels (41L-48L, 41R-48R)of at least two axles (21-28) are steerable, which steering device comprises steering rods (10L-16L, 10R-16R) connecting the steerable wheels (41L-48L, 41R-48R)to each other and is adapted such that for the wheels of at least one axle a ratio of a movement of the steering rod and a resulting steering movement of the wheels is adjustable subject to a mode of use of the vehicle (1), **characterized in that** at least one steering rod (11L, 12L, 11R, 12R; 10L, 10R) is connected displaceably to the wheel (43L, 43R; 41L, 41R) of one of the axles (23;21) by means of a transmission element (33) connected pivotally to a suspension part (19;17) of said wheel (43L, 43R; 41L, 41R).

2. Steering device as claimed in claim 1, **characterized in that** the transmission element (33) is lockable relative to the wheel (41L, 41R).

3. Steering device as claimed in claim 2, **characterized by** a locking pin (35) which co-acts with openings (50;36) in the transmission element (33) and in a suspension part (17) of the wheel (41L, 41R).

4. Steering device as claimed in any of the foregoing claims, **characterized in that** at least one wheel (42L, 42R, 43L, 43R; 41L, 41R) is lockable relative to the vehicle (1).

5. Steering device as claimed in any of the foregoing claims, **characterized in that** the wheel (43L, 43R) forms part of an intermediate axle (23) and the transmission element (33) has two ends each connected to a steering rod (11L, 12L, 11R, 12R), in addition to a pivot shaft (34) located therebetween and bearing-mounted on the suspension part (19) of the wheel (43L, 43R).

6. Steering device as claimed in any of the claims 1-4, **characterized in that** the transmission element (33) is connected at one end to a steering rod (10L, 10R) and pivotally mounted at the other end on the suspension part (17) of the wheel (41L, 41R).

7. Multi-axle vehicle (1) which has on each axle (21-28) at least two wheels (41L-48L, 41R-48R) arranged on either side of the vehicle (1), wherein the wheels (41L-48L, 41R-48R) of at least two axles (21-28) are steerable, **characterized by** a steering device as claimed in any of the foregoing claims.

8. Multi-axle vehicle (1) as claimed in claim 7, **characterized by** a chassis adjustable in longitudinal direction.

9. Multi-axle vehicle (1) as claimed in claim 7, **characterized in that** the vehicle (1) forms a module and is provided with means for coupling thereof to another vehicle module.

10. Multi-axle vehicle (1) as claimed in any of the claims 7-9, **characterized in that** at least some of the axles (21-28) have two wheels (41L-48L, 41R-48R) on each side of the vehicle (1) which are embodied as pivoted axle wheel sets.

11. Method for steering a multi-axle vehicle (1), which vehicle (1) has on each axle (21-28) at least two wheels (41L-48L, 41R-48R) arranged on either side of the vehicle (1), wherein the wheels (41L-48L, 41R-48R) of at least two axles (21-28) are steerable and the steerable wheels (41L-48L, 41R-48R) are connected to each other by steering rods (10L-16L, 10R-16R), comprising of generating a steering signal and transmitting the steering signal via the steering rods to the steerable wheels, wherein prior to transmitting the steering signal a transmission ratio between the steering signal and a resulting steering movement for the wheels of at least one axle is set by displacing the connecting point of at least one steering rod to the wheel of one of the axles, **characterized in that** the at least one steering rod (11L, 12L, 11R, 12R; 10L, 10R) is connected to the wheel (43L, 43R; 41L, 41R) by means of a transmission element (33) mounted pivotally on a suspension part (19; 17) of the wheel, and the transmission ratio is set by pivoting the transmission element.

12. Method as claimed in claim 11, **characterized in that** the transmission element (33) is locked in at least one position relative to the wheel (41L, 41R) in order to fix the set transmission ratio.

13. Method as claimed in claim 12, **characterized in that** the transmission element is locked relative to the wheel by inserting a locking pin (35) in openings (50; 36) in the transmission element (33) and in the suspension part (17) of the wheel (41L, 41R).

14. Method as claimed in any of the claims 11-13, **characterized in that** the transmission element (33) is bearing-mounted on a wheel (41L, 41R) of a foremost axle (21) as seen in the travel direction, and the transmission ratio is set by locking as desired the pivotable transmission element (33) relative to the wheel (41L, 41R) or the steerable wheel (41L, 41R) relative to the chassis (35).

15. Method as claimed in any of the claims 11-13, **characterized in that** the transmission element (33) is bearing-mounted on a wheel (43L, 43R) of an intermediate axle (23) as seen in the travel direction, and the transmission ratio is set by locking as desired the wheel (43L, 43R) on which the transmission element (33) is mounted or a wheel (42L, 42R) of an adjacent axle (22) relative to the chassis (35).

## Patentansprüche

1. Vorrichtung zum Lenken eines mehrachsigen Fahrzeugs (1), das an jeder Achse (21-28) wenigstens zwei Räder (41L-48L, 41R-48R) hat, die an beiden Seiten des Fahrzeugs (1) abgeordnet sind, wobei die Räder (41L-48L, 41R- 48R) von wenigstens zwei Achsen (21-28) lenkbar sind, wobei die Lenkvorrichtung Lenkstangen (10L-16L, 10R-16R) enthält, die die lenkbaren Räder (41L-48L, 41R-48R) miteinander verbinden, und geeignet ist, dass für die Räder von wenigstens einer Achse ein Verhältnis einer Bewegung der Lenkstange und einer resultierenden Lenkbewegung der Räder in Abhängigkeit von einem Modus der Benutzung des Fahrzeugs (1) einstellbar ist, **dadurch gekennzeichnet,**
**dass** wenigstens eine Lenkstange (11L, 12L, 11R, 12R; 10L, 10R) verschiebbar mit dem Rad (43L, 43R; 41L, 41R) einer der Achsen (23; 21) verbunden ist mittels eines Übertragungselementes (33), das drehbar mit einem Aufhängungsteil (19; 17) des Rades (43L, 43R; 41L, 41R) verbunden ist.

2. Lenkvorrichtung nach Anspruch 1,
**dadurch gekennzeichnet,**
**dass** das Übertragungselement (33) relativ zu dem Rad (41L, 41R) arretierbar ist.

3. Lenkvorrichtung nach Anspruch 2,
**gekennzeichnet durch**
einen Verriegelungsstift (35), der mit Öffnungen (50; 36) in dem Übertragungselement (33) und in einem Aufhängungsteil (17) des Rades (41L, 41R) zusammenwirkt.

4. Lenkvorrichtung nach jedem der vorhergehenden Ansprüche,
**dadurch gekennzeichnet,**
**dass** wenigstens ein Rad (42L, 42R, 43L, 43R; 41L, 41R) relativ zu dem Fahrzeug (1) arretierbar ist.

5. Lenkvorrichtung nach jedem der vorhergehenden Ansprüche,
**dadurch gekennzeichnet,**
**dass** das Rad (43L, 43R) Teil einer Zwischenachse (23) bildet und dass das Übertragungselement (33) zwei Enden hat, die beide mit einer Lenkstange (11L, 12L, 11R, 12R) verbunden sind, zusätzlich zu einer Drehachse (34), die zwischen diesen angeordnet und auf dem Aufhängungsteil (19) des Rades (43L, 43R) gelagert befestigt ist.

6. Lenkvorrichtung nach jedem der Ansprüche 1 bis 4,
**dadurch gekennzeichnet,**
**dass** das Übertragungselement (33) mit einem Ende an einer Lenkstange (10L, 10R) und mit dem anderen Ende gelenkig an dem Aufhängungsteil (17) des Rades (41L, 41R) befestigt ist.

7. Mehrachsiges Fahrzeug (1), das an jeder Achse (21-28) wenigstens zwei Räder (41L-48L, 41R-48R) hat, die an beiden Seiten des Fahrzeugs (1) angeordnet sind, wobei die Räder (41L-48L, 41R-48R) von wenigstens zwei Achsen (21-28) lenkbar sind,
**gekennzeichnet durch**
eine Lenkvorrichtung nach jedem der vorhergehenden Ansprüche.

8. Mehrachsiges Fahrzeug (1) nach Anspruch 7,
**gekennzeichnet durch**
ein Chassis, das in Längsrichtung einstellbar ist.

9. Mehrachsiges Fahrzeug (1) nach Anspruch 7,
**dadurch gekennzeichnet,**
**dass** das Fahrzeug (1) ein Modul bildet und mit Mitteln zur Verbindung mit anderen Fahrzeugmodulen versehen ist.

10. Mehrachsiges Fahrzeug (1) nach jedem der Ansprüche 7 bis 9,
**dadurch gekennzeichnet,**
**dass** wenigstens einige der Achsen (21-28) zwei Räder (41L-48L, 41R-48R) an jeder Seite des Fahrzeugs (1) haben, die als Drehachsen-Radsätze ausgeführt sind.

11. Verfahren zum Lenken eines mehrachsigen Fahrzeugs (1), wobei das Fahrzeug (1) an jeder Achse (21-28) wenigstens zwei Räder (41L-48L, 41R-48R) hat, die an beiden Seiten des Fahrzeugs (1) angeordnet sind, wobei die Räder (41L-48L, 41R-48R) von wenigstens zwei Achsen (21-28) lenkbar sind und die lenkbaren Räder (41L-48L, 41R-48R) durch Lenkstangen (10L-16L, 10R-16R) miteinander verbunden sind, enthaltend
das Erzeugen eines Lenksignals und Übertragen des Lenksignals über die Lenkstangen zu den lenkbaren Rädern, wobei vor dem Übertragen des Lenksignals ein Übertragungsverhältnis zwischen dem Lenksignal und einer resultierenden Lenkbewegung für die Räder wenigstens einer Achse festgesetzt wird durch Verlagerung des Verbindungspunkts von wenigstens einer Lenkstange mit dem Rad wenigstens einer der Achsen,
**dadurch gekennzeichnet,**
**dass** die wenigstens eine Lenkstange (11L, 12L, 11R, 12R; 10L, 10R) mit dem Rad (43L, 43R; 41L, 41R) mittels eines Übertragungselementes (33) verbunden ist, das drehbar an einem Aufhängungsteil (19; 17) des Rades befestigt ist, und dass das Übertragungsverhältnis durch Drehen des Übertragungselementes festgesetzt wird.

12. Verfahren nach Anspruch 11,
**dadurch gekennzeichnet,**
**dass** das Übertragungselement (33) in wenigstens einer Position relativ zu dem Rad (41L, 41R) arretiert wird, um das festgesetzte Übertragungs-verhältnis zu fixieren.

13. Verfahren nach Anspruch 12,
**dadurch gekennzeichnet,**
**dass** das Übertragungselement relativ zu dem Rad durch Einsetzen eines Verriegelungsstiftes (35) in Öffnungen (50; 36) in dem Übertragungselement (33) und in dem Aufhängungsteil (17) des Rades (41L, 41R) arretiert wird.

14. Verfahren nach jedem der Ansprüche 11 bis 13,
**dadurch gekennzeichnet,**
**dass** das Übertragungselement (33) auf einem Rad (41L, 41R) einer vorderen Achse (21), gesehen in der Fahrtrichtung, gelagert befestigt ist, und dass das Übertragungsverhältnis festgesetzt wird durch die gewünschte Arretierung des drehbaren Übertragungselementes (33) gegenüber dem Rad (41L, 41R) oder des lenkbaren Rades (41L, 41R) relativ zu dem Chassis (35).

15. Verfahren nach jedem der Ansprüche 11 bis 13,
**dadurch gekennzeichnet,**
**dass** das Übertragungselement (33) auf einem Rad (43L, 43R) einer Zwischenachse (23), in Fahrtrichtung gesehen, gelagert befestigt ist und dass das Übertragungsverhältnis festgelegt wird durch gewünschte Arretierung des Rades (43L, 43R) auf dem das Übertragungselement (33) befestigt ist, oder eines Rades (42L, 42R) einer benachbarten Achse (22) relativ zu dem Chassis (35).

## Revendications

1. Dispositif destiné à diriger un véhicule à essieux multiples (1), lequel véhicule (1) présente sur chaque essieu (21 - 28) au moins deux roues (41L - 48L, 41R - 48R) agencées de chaque côté du véhicule (1), dans lequel les roues (41L - 48L, 41R - 48R) d'au moins deux essieux (21 - 28) peuvent être dirigées, lequel dispositif de direction comprend des bielles de direction (10L - 16L, 10R - 16R) qui connectent les unes aux autres les roues qui peuvent être dirigées (41L - 48L, 41R - 48R), et est configuré de telle sorte que, pour les roues d'un essieu au moins, le rapport entre un déplacement de la bielle de direction et un déplacement de direction des roues en résultant soit réglable en fonction du mode d'utilisation du véhicule (1), **caractérisé en ce qu'**une bielle de direction (11L, 12L, 11R, 12R ; 10L, 10R) au moins est connectée de manière mobile à la roue (43L, 43R ; 41L, 41R) de l'un des essieux (23 ; 21) au moyen d'un élément de transmission (33) connecté de manière pivotante à une partie suspension (19 ; 17) de ladite roue (43L, 43R ; 41L, 41R).

2. Dispositif de direction selon la revendication 1, **caractérisé en ce que** l'élément de transmission (33) peut être verrouillé par rapport à la roue (41L, 41R).

3. Dispositif de direction selon la revendication 2, **caractérisé par** une broche de verrouillage (35) qui agit conjointement avec des ouvertures (50 ; 36) situées dans l'élément de transmission (33) et dans une partie suspension (17) de la roue (41L, 41R).

4. Dispositif de direction selon l'une quelconque des revendications précédentes, **caractérisé en ce qu'**une roue (42L, 42R, 43L, 43R ; 41L, 41R) au moins peut être verrouillée par rapport au véhicule (1).

5. Dispositif de direction selon l'une quelconque des revendications précédentes, **caractérisé en ce que** la roue (43L, 43R) fait partie d'un essieu intermédiaire (23) et que l'élément de transmission (33) présente deux extrémités, chacune d'elles étant connectée à une bielle de direction (11L, 12L, 11R, 12R), en plus de l'être à un axe de pivot (34) situé entre elles et monté sur roulement sur la partie suspension (19) de la roue (43L, 43R).

6. Dispositif de direction selon l'une quelconque des revendications 1 à 4, **caractérisé en ce que** l'élément de transmission (33) est connecté au niveau d'une extrémité à une bielle de direction (10L, 10R), et est monté de manière pivotante au niveau de l'autre extrémité sur la partie suspension (17) de la roue (41L, 41R).

7. Véhicule à essieux multiples (1) qui présente sur chaque essieu (21 - 28) au moins deux roues (41L - 48L, 41R - 48R) agencées de chaque côté du véhicule (1), dans lequel les roues (41L - 48L, 41R - 48R) de deux essieux (21 - 28) au moins peuvent être dirigées, **caractérisé par** un dispositif de direction selon l'une quelconque des revendications précédentes.

8. Véhicule à essieux multiples (1) selon la revendication 7, **caractérisé par** un châssis réglable dans la direction longitudinale.

9. Véhicule à essieux multiples (1) selon la revendication 7, **caractérisé en ce que** le véhicule (1) forme un module et est doté de moyens destinés à accoupler celui-ci à un autre module de véhicule.

10. Véhicule à essieux multiples (1) selon l'une quelconque des revendications 7 à 9, **caractérisé en ce que** certains au moins des essieux (21 - 28) présentent deux roues (41L - 48L, 41R - 48R) situées de chaque côté du véhicule (1), qui sont incorporées en tant qu'ensembles de roues d'essieu articulé.

11. Procédé destiné à diriger un véhicule à essieux multiples (1), lequel véhicule (1) présente sur chaque essieu (21 - 28) au moins deux roues (41L - 48L, 41R - 48R) agencées de chaque côté du véhicule (1), dans lequel les roues (41L - 48L, 41R - 48R) de deux essieux (21 - 28) au moins peuvent être dirigées et les roues qui peuvent être dirigées (41L - 48L, 41R - 48R) sont connectées les unes aux autres par des bielles de direction (10L - 16L, 10R - 16R), comprenant les étapes consistant à générer un signal de direction et à transmettre le signal de direction aux roues qui peuvent être dirigées par l'intermédiaire des bielles de direction, dans lequel, avant de transmettre le signal de direction, un rapport de transmission entre le signal de direction et un déplacement de direction en résultant des roues du ou des essieux, est fixé en déplaçant le point de connexion de la ou des bielles de direction par rapport à la roue de l'un des essieux, **caractérisé en ce que** la ou les bielles de direction (11L, 12L, 11R, 12R ; 10L, 10R) sont connectées à la roue (43L, 43R ; 41L, 41R) au moyen d'un élément de transmission (33) monté de manière pivotante sur une partie suspension (19 ; 17) de la roue, et le rapport de transmission est fixé en faisant pivoter l'élément de transmission.

12. Procédé selon la revendication 11, **caractérisé en ce que** l'élément de transmission (33) est verrouillé dans une position au moins par rapport à la roue (41L, 41R) de façon à fixer le rapport de transmission fixé.

13. Procédé selon la revendication 12, **caractérisé en ce que** l'élément de transmission est verrouillé par rapport à la roue en insérant une broche de verrouillage (35) dans des ouvertures (50 ; 36) situées dans l'élément de transmission (33) et dans la partie suspension (17) de la roue (41L, 41R).

14. Procédé selon l'une quelconque des revendications 11 à 13, **caractérisé en ce que** l'élément de transmission (33) est monté sur roulement sur une roue (41L, 41R) de l'essieu le plus en avant (21) quand on regarde dans la direction du déplacement, et le rapport de transmission est fixé en verrouillant comme on le souhaite l'élément de transmission qui peut pivoter (33) par rapport à la roue (41L, 41R), ou la roue qui peut être dirigée (41L, 41R) par rapport au châssis (35).

15. Procédé selon l'une quelconque des revendications 11 à 13, **caractérisé en ce que** l'élément de transmission (33) est monté sur roulement sur une roue (43L, 43R) d'un essieu intermédiaire (23) quand on regarde dans la direction du déplacement, et le rapport de transmission est fixé en verrouillant comme on le souhaite la roue (43L, 43R) sur laquelle est monté l'élément de transmission (33), ou une roue (42L, 42R) d'un essieu adjacent (22) par rapport au châssis (35).
